# EUROPEAN PATENT APPLICATION

(11) **EP 1 569 432 A1**
(43) Date of publication of application: **31.08.2005**
(21) Application number: 05003792.8
(22) Date of filing: 22.02.2005
(51) Int. Cl.: H04M 19/04

(54) **Apparatus and method for processing telephone ringing sounds**

(30) Priority: 26.02.2004 KR 2004013132
(71) Applicant: LG ELECTRONICS INC., Seoul (KR)
(72) Inventor: Park, Yong Chul, Seoul (KR); Song, Jung Min, Seoul (KR); Lee, Jae Hyuck, Seoul (KR); Lee, Jun Yup, Yongin-si, Kyunggi-do (KR)
(74) Representative: Rupprecht, Kay

(57) **Abstract**

Provided are apparatus and method for processing bell sound in a wireless terminal. Position data of sound source samples corresponding to bell sound contents are extracted in advance and then replayed. In the apparatus for processing bell sound, musical score data are parsed from bell sound contents, and position data of sound source samples corresponding to the parsed musical score data are extracted, then establishing a database. By repeatedly using the position data of the sound source samples corresponding to the musical score data to be used one or more times, it is unnecessary to perform the process of repeatedly parsing the sound source so as to read the sound source position information during the real-time replay of the bell sound, resulting in reduction of the system load.

## Description

### BACKGROUND OF THE INVENTION

### Field of the Invention

The present invention relates to apparatus and method for processing bell sound in a wireless terminal, which are capable of reducing system load by previously establishing position data of sound source samples so as to replay sound contents.

### Description of the Related Art

A wireless terminal is a device that can make a phone call or transmit and receive data. Such a wireless terminal includes a cellular phone, a Personal Digital Assistant (PDA), and the like.

A Musical Instrument Digital Interface (MIDI) is a standard protocol for data communication between electronic musical instruments. The MIDI is a standard specification for hardware and data structure that provide compatibility in the input/output between musical instruments or between musical instruments and computers through digital interface. Accordingly, the devices having the MIDI can share each other because compatible data are created therein.

As the wireless terminal is generalized, technologies for adding various functions for the wireless terminal have been developed. Among them, a typical technology is to provide and output various sounds.

A sound related technology according to the related art simply outputs music provided via automatic response service (ARS) out of the wireless terminal. In resent years, however, bell sounds can be provided through various routes such as Internet. Also, using the MIDI technology, high-definition bell sound such as 40 or 64 poly can be outputted.

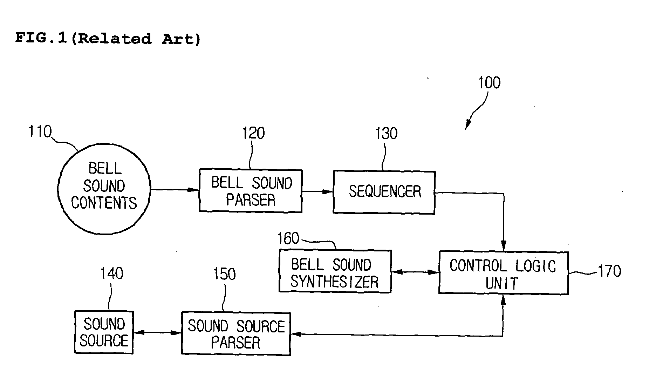

Fig. 1 is a block diagram illustrating an apparatus for processing bell sound in a wireless terminal according to the related art.

Referring to Fig. 1, the apparatus includes MIDI-based bell sound contents 110, a bell sound parser 120 for parsing MIDI format for the bell sound contents 110, a sequencer 130 for aligning the parsed information regularly, a sound source 140 where sound source samples are registered in a file format, a sound source parser 150 for parsing the sound source format, a bell sound synthesizer 160 for parsing the sound source samples corresponding to scales of the bell sound contents 110 and converting the parsed sound source samples into frequencies corresponding to the respective scales, and a control logic unit 170 for requesting the scale information of the sequencer 130 and the sound source samples of the sound source parser 150 according to a replay order of the bell sound and outputting them to the bell sound synthesizer 160.

An apparatus for processing bell sound in a related art wireless terminal will now be described with reference to the accompanying drawings.

Referring to Fig. 1, the apparatus 100 performs a frequency conversion in real time according to musical score data of the bell sound contents 110 and generates a sound.

The bell sound contents 110 are MIDI-based contents having the musical score data and include contents that are stored in the wireless terminal or downloaded from the outside through the communication.

Except the basic sound source, most of the bell sound music of the wireless terminal has a MIDI file format. The MIDI structure is comprised of a lot of scales and control signals according to tracks. When performing the respective bell sounds, musical instruments corresponding to the scales and complementary data corresponding thereto are parsed from the sound source and the sound is created by the result.

The bell sound parser 120 parses the format of the MIDI-based bell sound contents. That is, the bell sound parser 120 parses replay information from the bell sound contents. The replay information includes note, scale, timbre, and scale replay time. Here, the note is a minimum unit constituting a musical piece, and it is a sound whose pitch is fixed, that is, a sound that can be sung. The timbre is a unique property of the sound that can distinguish two sounds having the same pitch, intensity and length.

The sequencer 130 aligns and outputs the musical score data parsed by the bell sound parser 120 with reference to time. That is, the sequencer 130 again aligns the parsed musical score data with reference to time in tracks or musical instruments so as to replay the sound with reference to time.

The sound source 140 includes a plurality of sound source samples that are registered in advance. After sampling actual sounds for various musical instruments, information on the respective musical instruments is stored as a WAVE waveform, for example, a wave table sound source.

Due to a problem of memory capacity in the terminal, the sound source 140 does not register all sound source samples with respect to all musical notes of the respective musical instruments (piano, drum, etc.), but registers several typical sound source samples. That is, in order for efficient utilization of the memory, one scale in each musical instrument does not have independent WAVE waveform, but several sounds are grouped and one typical WAVE waveform is used equally.

The sound source parser 150 parses typical sound source(s) corresponding to the scale data of the bell sound contents from the sound source 140 so as to replay the bell sound contents 110.

The control logic unit 170 performs communication and control operation for the respective elements. Specially, the control logic unit 170 requests the sound source samples through the sound source parser 150 by using the musical score data aligned by the sequencer 130. Meanwhile, the control logic unit 170 transmits the scales to be replayed from the sequencer 130 and the sound source parser 150 and the corresponding sound sources to the bell sound synthesizer 160.

The bell sound synthesizer 160 generates music sounds through the frequency conversion by using the respective scales and the typical sound source samples. Since all sound sources for the respective musical instruments are not registered in the sound source samples, the bell sound synthesizer 160 receives several typical sound samples for the respective musical instruments, which are registered in the sound source samples, and analogizes and generates WAVE waveforms corresponding to all scales.

The apparatus synthesizes and outputs the sound source samples corresponding to all scales of the bell sound contents 110 in real time. At this point, when replaying the music, the process of generating various sound source samples from the sound sources 140 are simultaneously performed in real time. Also, the above-described operations are repeatedly performed every when outputting the bell sound.

Consequently, the process of generating the WAVE waveform in the bell sound synthesizer 160 can correspond to 40 or 64 poly according to the bell sound music. Since this requires a large amount of system load, the replay of the bell sound where the sound is created in real time is much loaded. That is, with the increase in the note of the bell sound to be expressed, the process of analyzing the sound source samples and reading the necessary scales and the supplementary data associated with the scales must be repeated one or more times, causing the overload of the system.

Further, with the increase in the poly of the bell sound to be expressed, the system is overloaded much more when the bell sound is generated using only several sound source samples.

### SUMMARY OF THE INVENTION

Accordingly, the present invention is-directed to an apparatus and method for processing bell sound that substantially obviates one or more problems due to limitations and disadvantages of the related art.

An object of the present invention is to provide an apparatus and method for processing bell sound, in which position data of sound source samples corresponding to musical score data of a replaying sound are established in advance and the sound source samples are read out.

Another object of the present invention is to provide an apparatus and method for processing bell sound, in which position data of sound source samples corresponding to musical score data of inputted bell sound contents are extracted in advance and stored, and a frequency conversion is performed after reading sound source samples corresponding to the position data of the sound source samples in replaying the bell sound contents.

A further another object of the present invention is to provide an apparatus and method for processing bell sound, in which scales repeated one or more times and position data of sound source samples associated with the scales are stored in advance and the sound source samples are parsed from the position data, resulting in reduction of system load in a replay of the bell sound contents.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, an apparatus for processing bell sound includes: a bell sound parser for parsing musical score data from inputted bell sound contents; a sequencer,for aligning the parsed musical score data in order of time; a sound source where a plurality of sound source samples are stored; a sound source parser for parsing position information of the sound source samples corresponding to the musical score data; a sound source replay information database for storing the position data of the sound source samples and the musical score data, which are matched with each other; a control logic unit for receiving the musical score data aligned by the sequencer and sequentially outputting the position data of the sound source samples; and a bell sound synthesizer for reading sound source samples corresponding to the position data of the sound source samples and generating music sound corresponding to the musical score data.

In another aspect of the present invention, there is provided an apparatus for processing bell sound, including: means for parsing musical score data contained in inputted bell sound contents; means for parsing positions of sound samples corresponding to the musical score data; means for storing the musical score data and the position data of the sound source samples, which are matched with each other; and means for reading sound source samples corresponding to the position data of the sound source samples in replay order of the musical score data and converting the sound source samples into music sounds.

In a further another aspect of' the present invention, there is provided a method for processing bell sound, including the steps of: parsing musical score data of inputted bell sound contents; parsing position data of sound source samples corresponding to the parsed musical score data and establishing in advance the position data in a database; and reading the sound source samples corresponding to the position data of the sound source samples and converting the sound source samples into frequencies depending on a replay time of the musical score data.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

Fig. 1 is a block diagram of an apparatus for processing a bell sound according to the related art;

Fig. 2 is a block diagram of an apparatus for processing a bell sound according to an embodiment of the present invention; and

Fig 3 is a flowchart illustrating a method for processing a bell sound according to an embodiment of the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

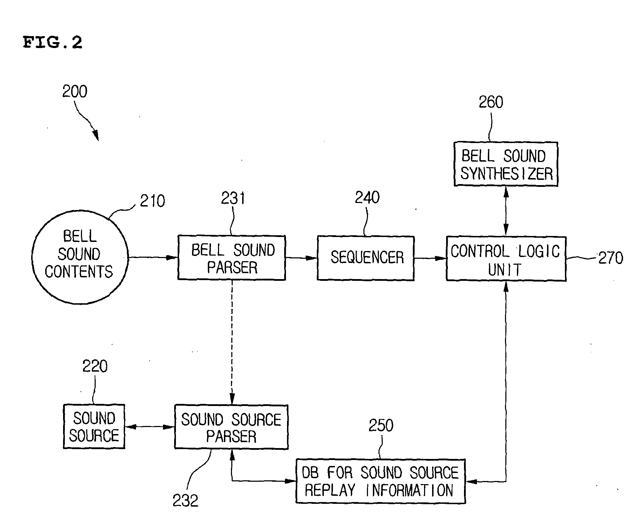

Fig. 2 is a block diagram of an apparatus for processing bell sound according to an embodiment of the present invention.

Referring to Fig. 2, the apparatus 200 includes bell sound contents 210, a sound source 220 where a plurality of sound source samples are registered, a bell sound parser 231 for parsing musical score data from the bell sound contents, a sound source parser 232 for parsing the sound source samples and position data thereof, a sequencer 240 for aligning the musical score data parsed from the bell sound format with reference to regular time, a sound source replay database (DB) 250 for storing position data of sound source samples corresponding to the musical score data, a control logic unit 270 for sequentially outputting the position data of the sound source samples according to the replay time of the musical score data, and a bell sound synthesizer 260 for performing a frequency conversion of the sound source samples corresponding to respective scales by the musical score data and the position data of the sound source samples and generating music sounds.

The apparatus 200 extracts in advance the position data of the sound source samples of the sound source 220 with respect to the bell sound contents 210 and stores them in the sound source replay information DB 250. Thus, it is unnecessary to parse the position data of the sound source samples in the replay of the bell sound contents.

The bell sound contents 210 are MIDI-based contents having the musical score data. Except basic sound sources, most of the sound sources have MIDI-based music file format. The MIDI format includes a lot of scales and control signals according to tracks or musical instruments. In order to output the scales as the bell sound, the musical instruments corresponding to the scales and complementary data corresponding thereto are received from the sound source replay information DB 250, not the sound source, and are then synthesized.

The bell sound parser 220 parses the musical score data of the bell sound contents. The musical score data includes note, scale, timbre, scale replay time, control signal. Here, the note is a minimum unit constituting a musical piece, and it is a sound whose pitch is fixed, that is, a sound that can be sung. The scale arranges the sound in the order of stepwise height. The timbre is a unique property of the sound that can distinguish two sounds having the same pitch, intensity and length.

The bell sound contents 210 can be transmitted to the wireless terminal in various manners, such as a download via wireless/wired Internet, ARS service, self-generation in the wireless terminal or stored contents.

In the sound source 220, data about the respective musical instruments are stored in a WAVE waveform after the actual sound source samples of the various musical instruments are sampled. The sound source 220 includes a Pulse Code Modulation (PCM) sound source, a MIDI sound source, and a wave table sound source. The wave table sound source stores data about the musical instruments in a WAVE waveform while sampling and storing the actual sounds of the various musical instruments.

Due to a problem of memory capacity in the terminal, the sound source 220 does not store all sounds with respect to all scales of the respective musical instruments (piano, guitar, etc.), but registers several typical sounds. That is, in order for efficient utilization of the memory, one scale in each musical instrument does not have independent WAVE waveform, but several sounds are grouped and one typical WAVE waveform is used equally. Here, in order to apply one typical WAVE waveform to the respective scales, additional data capable of changing the scales are stored in the wave table sound source 220 together with the WAVE waveform.

If the bell sound parser 231 parses a lot of scales, notes, timbres, scale replay time and control signal according to the tracks of the bell sound contents or musical instruments, the sound source parser 232 receives part of the musical score data from the bell sound parser 231 and parses the position data of the sound source samples.

At this point, the sound source parser 231 receives the scales of the musical score data and the timbre data and parses the corresponding sound source samples from the sound source.

The sound source parser 231 parses the position data of the sound source samples, matches the scales and stores them in the sound source replay information DB 250. That is, the timbre of the bell sound contents to be replayed and the position data of the sound samples corresponding to all scales are stored in the sound source replay information DB 250.

The sequencer 240 aligns the musical score data aligned according to the tracks or musical instruments in the order of a time. That is, in the replay of the bell sound, the musical score data according to the tracks or musical instruments are aligned with reference to time.

The sound source replay information DB 250 stores the sound source replay information, including the scales of the bell sound contents to be currently replayed and the sound source samples corresponding to the scales among the entire sound source samples, that is, the position of the WAVE waveform. Here, the position of the sound source sample includes only position data of the sound source sample used by the bell sound contents to be replayed. For example, only position data of do-sound in the piano is stored.

In other words, the sound source replay information DB 250 stores the position data of the sound source samples that are used repeatedly at least one time among all replaying scales. Further, the sound source replay information DB 250 stores the scales and the timbre data and complementary data associated to the scales. Here, the timbre data includes sound source tag or name, bell sound music tag or name, kinds of musical instruments, etc.

The control logic unit 270 controls an overall operation of the apparatus for processing the bell sound. Also, the control logic unit 270 controls the communication between the sequencer 240 and the sound source replay information DB 250 and between the sequencer 240 and the bell sound synthesizer 260.

The control logic unit 270 receives the musical score data temporally aligned from the sequencer 240 and requests the position data of the sound source samples to the sound source replay information DB 250, and then receives the position data of the sound source samples that meet the desired condition. That is, the control logic unit 270 reads the position data of the sound source samples corresponding to the respective scales from the sound source replay information DB 280 and outputs them to the bell sound synthesizer 260.

The bell sound synthesizer 260 generates audio waveform that will be replayed through a speaker. That is, the bell sound synthesizer 260 reads the sound source sample corresponding to the position of the sound source sample of the sound source replay information DB 250 and generates the sound through the frequency conversion.

The bell sound synthesizer 260 generates the sound by using the scale and the WAVE waveform stored in the sound source replay information DB 250. Specifically, since the position data about the previously-stored sound source sample of the scales that are repeated one or more times are used repeatedly, it is possible to solve a related art problem that repeatedly requests the parsing of the sound source to the sound source parser.

By previously establishing the position data of the sound source samples stored in the sound source replay information DB 250 before the replay of the bell sound, it is unnecessary to repeatedly parse the position of the sound source samples when the scales are repeated several times in the replay of the bell sound, that is, when the same musical instruments and the scales having the same tone are repeated several times. Accordingly, in the replay of the bell sound, the user does not feel a predetermined delay caused in the establishment of the DB.

In this manner, when replaying the bell sound through the bell sound synthesizer 260, the control logic unit 270 communicates with the sound source replay information DB 250 without performing the communication with the sound source parser 232. Thus, it is unnecessary to perform the process of repeatedly parsing the sound source 240 so as to read the sound source position information during the replay of the bell sound, resulting in reduction of the system load.

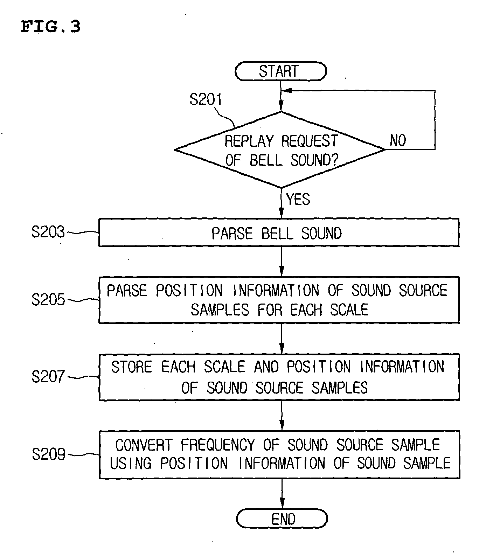

Fig. 3 is a flowchart illustrating a method for processing bell sound according to an embodiment of the present invention.

Referring to Fig. 3, it is checked a replay request of bell sound contents (S201). If there is the replay request of the bell sound, format of the bell sound contents is parsed (S203). At this point, information on scale, note, timbre and replay time can be obtained according to the parsing result of the bell contents.

Then, the position information of the sound sources corresponding to the respective scales and timbres is parsed (S205). The position data of the parsed sound source samples and the respective scales are matched and then stored in advance. Prior to the replay of the bell sound, the position of the sound source sample is parsed through the bell source parser, and is then matched with the respective scales and established in the DB (S207).

Here, in the step S203, a plurality of scales contained in the bell sound contents and timbre data corresponding to the scales are parsed and transmitted to the sound source parser and the sequencer.

In the step S205, the position data of the sound source sample corresponding to the scale and the timbre data are parsed.

The information stored in the DB is used to find the sound source sample, such as the sound source tag or name, the bell sound music tag or name, the tones of musical instruments, the kinds of musical instruments, the positions of WAVE waveform of musical instruments, etc. The position information of the WAVE waveform of the musical instrument includes positions of the sound source samples corresponding to the respective scales.

Then, in the replay of the bell sound, the bell sound music is simultaneously synthesized using the sound source replay information in real time (S209).

According to the present invention, the musical note and the sound source information generated one or more times in the replay of the bell sound are previously parsed and stored and the stored information is used in replaying the bell sound. Therefore, the system load is reduced so that the bell sound is smoothly replayed. Also, a lot of chords can be effectively expressed.

It will be apparent to those skilled in the art that various modifications and variations can be made in the present invention. Thus, it is intended that the present invention covers the modifications and variations of this invention provided they come within the scope of the appended claims and their equivalents.

## Claims

1. An apparatus for processing bell sound, comprising:
a bell sound parser for parsing musical score data from inputted bell sound contents;
a sequencer for aligning the parsed musical score data in order of time;
a sound source where a plurality of sound source samples are stored;
a sound source parser for parsing position information of the sound source samples corresponding to the musical score data;
a sound source replay information database for storing the position data of the sound source samples and the musical score data, which are matched with each other;
a control logic unit for receiving the musical score data aligned by the sequencer and sequentially outputting the position data of the sound source samples; and
a bell sound synthesizer for reading sound source samples corresponding to the position data of the sound source samples and generating music sound corresponding to the musical score data.

2. The apparatus according to claim 1, wherein the bell sound parser transmits the musical score data parsed from the bell sound contents to the sound source parser.

3. The apparatus according to claim 2, wherein the bell sound parser parses the musical score data, including scale, timbre, timbre replay time and note contained in the bell sound contents, to the sequencer, and outputs scale and timbre data among the musical score data to the sound source parser.

4. The apparatus according to claim 1, wherein the sound source parser parses position data of at least one sound source sample corresponding to the musical score data and stores the parsed position data in the sound source replay information database.

5. The apparatus according to claim 1, wherein the sound source parser parses the position data of the sound source sample corresponding to the musical score data before replaying the bell sound contents and stores the parsed position data in the sound source replay information database.

6. The apparatus according to claim 5, wherein the sound source replay information database stores scale data of the bell sound contents and timbre data corresponding to the scale data, which are matched with the position data of the sound source samples.

7. The apparatus according to claim 6, wherein the timbre data are musical instrument data corresponding to scales of the musical score data.

8. The apparatus according to claim 4, wherein the sound source replay information database further stores sound source tag or name and bell sound music tag or name, which correspond to scales of the musical score data.

9. The apparatus according to claim 1, wherein the sound source sample is a wave table sound source.

10. The apparatus according to claim 1, wherein the bell sound contents are downloaded through wireless/wired Internet or ARS service, or generated or stored in a wireless terminal.

11. The apparatus according to claim 1, wherein the sound source replay information database is established before replaying the position data of the sound source samples.

12. The apparatus according to claim 1, wherein the position data of the sound source samples are matched with one identical scale.

13. A method for processing bell sound, comprising the steps of:
parsing musical score data of inputted bell sound contents;
parsing position data of sound source samples corresponding to the parsed musical score data and establishing in advance the position data in a database; and
reading the sound source samples corresponding to the position data of the sound source samples and converting the sound source samples into frequencies depending on a replay time of the musical score data.

14. The method according to claim 13, wherein scale and timbre data are considered in parsing the position data of the sound source samples.

15. The method according to claim 13, wherein the database stores position data of sound source samples associated with all musical instruments used in the bell sound contents.

16. The method according to claim 13, wherein the sound source samples are a wave table sound source.
